# EUROPEAN PATENT APPLICATION

(11) **EP 2 144 194 A1**
(43) Date of publication of application: **13.01.2010**
(21) Application number: 09152783.8
(22) Date of filing: 13.02.2009
(51) Int. Cl.: G06Q 10/00

(54) **System for remote and/or deferred monitoring of the consumption of articles in stock on shelves and the like**

(30) Priority: 08.07.2008 IT TO20080525
(71) Applicant: Garrisonpop s.r.l., 10123 Torino (IT)
(72) Inventor: Aimone Catti, Alberto, 10126, Torino (IT)
(74) Representative: Buzzi, Franco

(57) **Abstract**

A system for remote and/or deferred monitoring of the consumption of articles in stock on shelves (1) and the like, including sensors (2) operatively associated to the shelves (1) to furnish data on the presence/absence of articles. The monitoring system is operatively connected to a computerized enterprise-resource-planning (ERP) system (3) of the commercial enterprise, and/or of the distributor, and/or of the producer of the goods.

## Description

### Field of the invention

The present invention relates in general to the logistics connected to the consumption, and hence to the needs and modalities of provisioning, of goods and articles in general that are in stock on shelves and the like (warehouse or store-room shelves, display units, etc.), particularly but not exclusively in the field of trading firms, retail businesses and the like.

Traditionally, verification of the consumption of goods, and hence the possibility of making available information on the interaction between the trading firms and retail businesses and the like and the consumers or users, falls under the responsibility of the suppliers, rather than of the operators managing the businesses.

The monitoring thus carried out, typically in a merely visual way with the aid of possible systems of electronic recording, produces somewhat approximate results and in any case ones that are not suitable for enabling detailed and timely analyses such as to address effectively the strategies of provisioning of the goods also by the producers and their distributors.

### Summary of the invention

The object of the invention is to provide a system aimed at solving the aforesaid problem in an efficient way, and said object is achieved basically thanks to a monitoring system including sensor means operatively associated to said shelves to furnish data on the presence/absence of articles, means for transmission and means for processing of the data arriving from the sensor means, in which said processing means are operatively connected to a computerized system for company management, referred to as "enterprise resource planning" (ERP) system, of an enterprise that markets and/or distributes, and/or produces articles, said system being typically constituted by servers, fixed computers, portable computers, palmtops, and cellphones.

The operative connection between the monitoring system and the enterprise-resource-planning system, obtained by integration and/or synchronization between the real environment of presence/absence of the goods and the operational environment, enables management, in a more direct and immediate way, of the processes of loading/stock-taking/scrapping of goods.

The synchronization and/or integration of the monitoring system according to the invention with a computerized ERP system guarantees a useful and effective application thereof, for example also to the industrial sector (where the real environment consists in the production warehouse, the process of loading/stock-taking/scrapping of goods is the one carried out by the storekeepers that supply the production lines, and the process of withdrawal of goods is the one performed by the production staff), in addition to the sector of trading firms and retail businesses such as large stores (where the real environment is, for example, constituted by the display shelves of a supermarket, and the process of loading/stock-taking/scrapping is the one carried out by the storekeepers or else by the external suppliers, and the process of withdrawal of goods is that performed by the consumer), as well as again in the health sector (where the real environment is typically the stockroom of a chemist's or the stores of a hospital department, and the processes of loading/stock-taking/scrapping and withdrawal of articles are the ones performed by the nurses and other medical staff).

Transmission of the data detected by the sensor means to the computerized ERP system can be obtained via wired connections, or else via telephone connections of the GSM type and the like, or else again via the Internet, or else by means of Wi-Fi connections, or else radiofrequency connections.

The system according to the invention moreover envisages the use, for the sensor means, of a particular modular display unit provided with a resting surface for the goods formed by an elastic film bearing on its opposite faces metal strips set at intervals apart, which define capacitors with a capacitance that varies as a function of the load and are connected via electrical connection paths to the transmission means.

### Brief description of the drawings

The invention will now be described in detail with reference to the annexed drawings, which are provided purely by way of non-limiting example and in which:
- Figure 1 is a simplified block diagram that shows the essential components of the monitoring system according to the invention;
- Figures 2-6 are flowcharts that exemplify a series of possible operating modes of the monitoring system according to the invention;
- Figure 7 is a schematic perspective view that shows an example of elementary display module that can be used in the monitoring system according to the invention;
- Figure 8 shows, at a larger scale, a sensitive film applied on the bottom of the display module of Figure 7; and
- Figure 9 is a cross-sectional view, at a larger scale, of the film of Figure 8.

### Detailed description of the invention

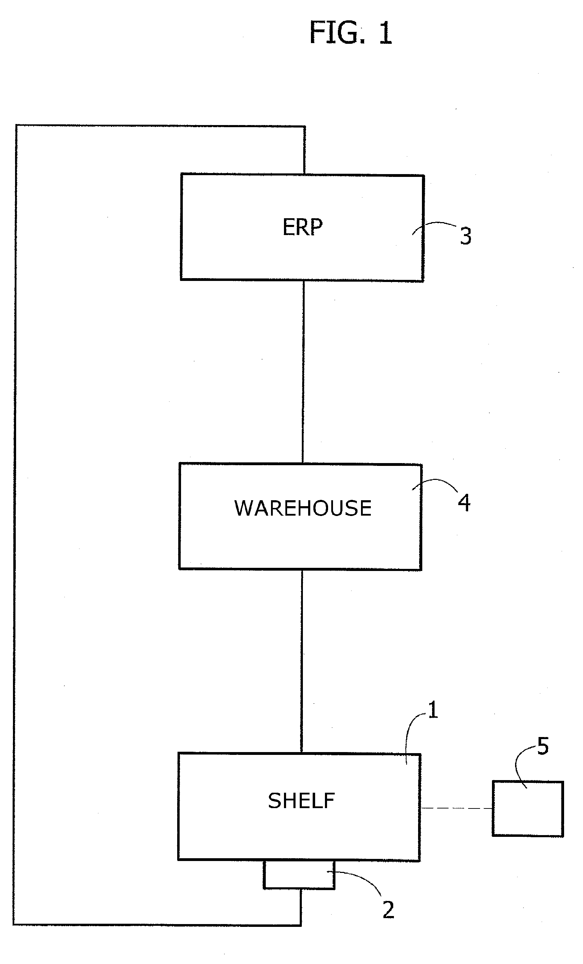

The block diagram of Figure 1 illustrates the general configuration of the monitoring system according to the invention, typically applied to a real environment constituted by display shelving 1 of a supermarket. Said real environment, as already clarified previously, may, however, consist of the warehouse of a production company, the pharmaceutical stores of a hospital unit, etc.

The display shelves 1 are prearranged, directly or else in the way clarified in what follows, for display of the goods on sale, for example packages of foodstuff products. Operatively associated to said shelves are sensors, designated as a whole by the reference number 2, provided for detecting the presence/absence of the goods and generating corresponding signals. Said sensors can be chosen in the range of the following categories: proximeters, microswitches, optical sensors, weight sensors, pressure sensors, laser readers, radio-frequency readers, infrared readers, level sensors, magnetic switches, mechanical switches, capacitive sensors. An example of embodiment of the latter category will be described in detail in what follows.

The signals generated by the sensors 2, indicating the consumption of the goods displayed on the shelf 1, are sent to a processing system, typically constituted by a dedicated microprocessor electronic unit, which can be programmed according to the type of goods and is directly associated to the sensors 2 in a position corresponding to the shelf 1 or else constituted by a remote unit, such as servers, fixed computers, portable computers, palmtops, or cellphones.

In the above case, the transmission of the signals issued by the sensors 2 can be obtained via wired connections or else via a GSM, GPRS, UTMS network, or the Internet, etc., also with Wi-Fi connection, or else radiofrequency connection.

According to the peculiar characteristic of the invention the monitoring system based upon the data provided by the sensors 2 is operatively connected, and more precisely integrated and/or synchronized, with a computerized enterprise-resource-planning (ERP) system, designated by the reference 3, of the real environment corresponding to the shelf 1. In the case of the example illustrated, the ERP system 3 is the management system of the supermarket in which the shelf 1 is installed, and is prearranged in a way in itself known for managing purchases and sales, marketing functions, stock-taking functions, functions of administrative and financial control, etc.

By means of integration and/or synchronization with the monitoring system according to the invention, the ERP management system 3 is enabled to handle directly the transactions of the goods entering and leaving the warehouse 4 and the steps of loading of the goods from the warehouse 4 onto the shelf 1 according to the contingent needs.

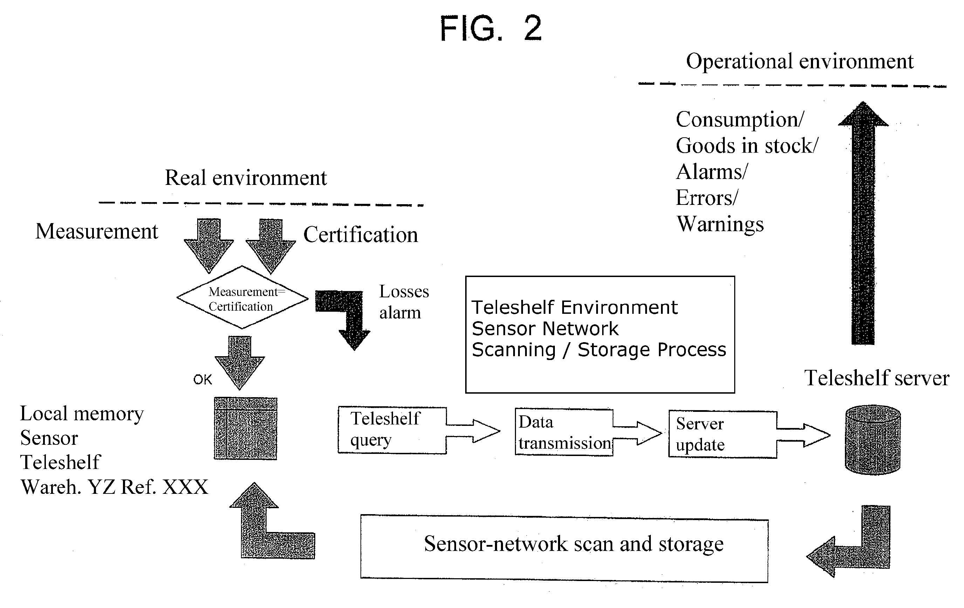

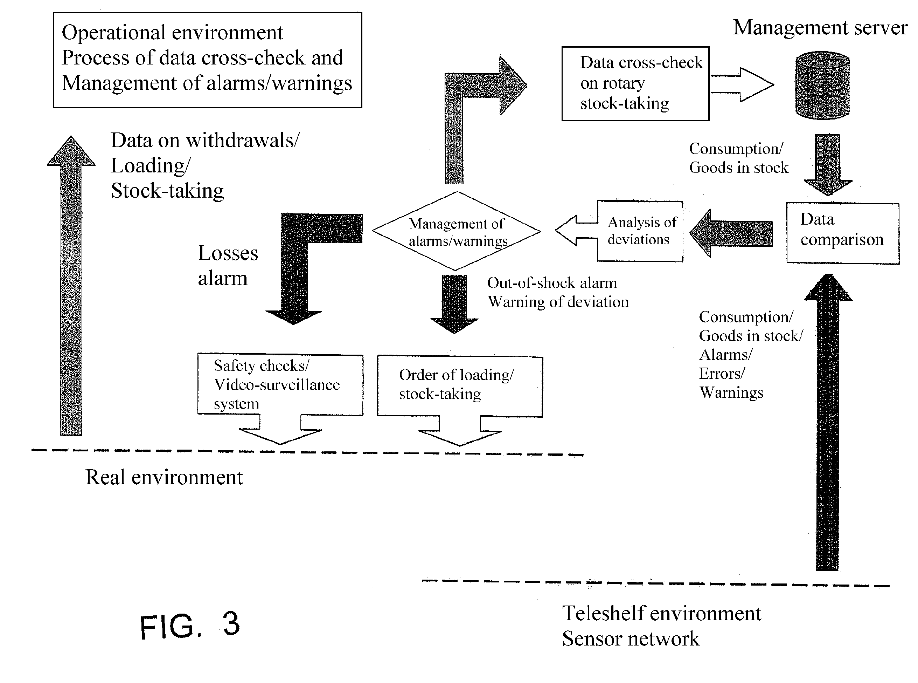

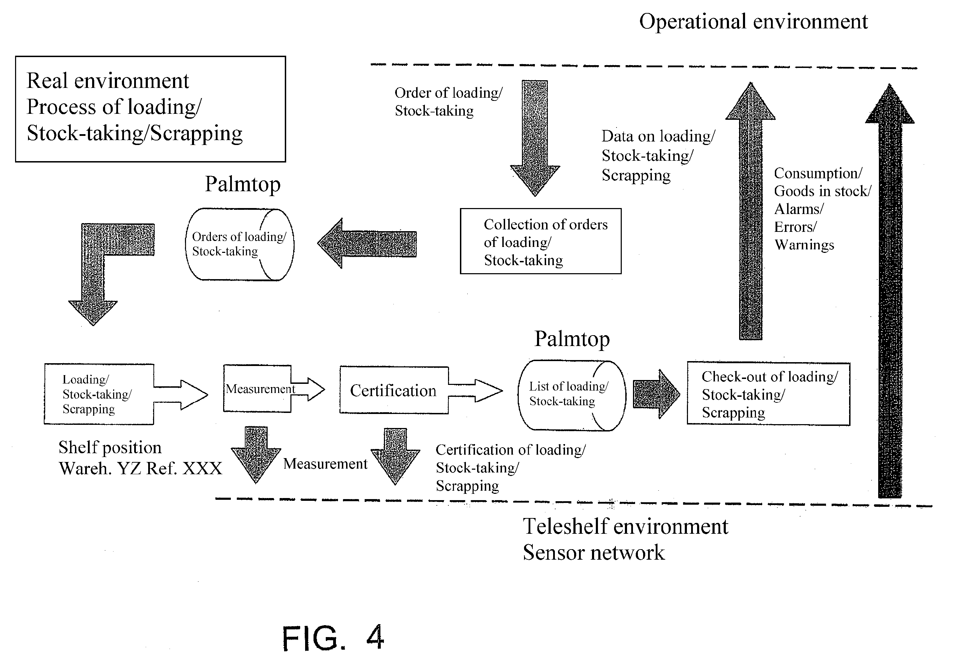

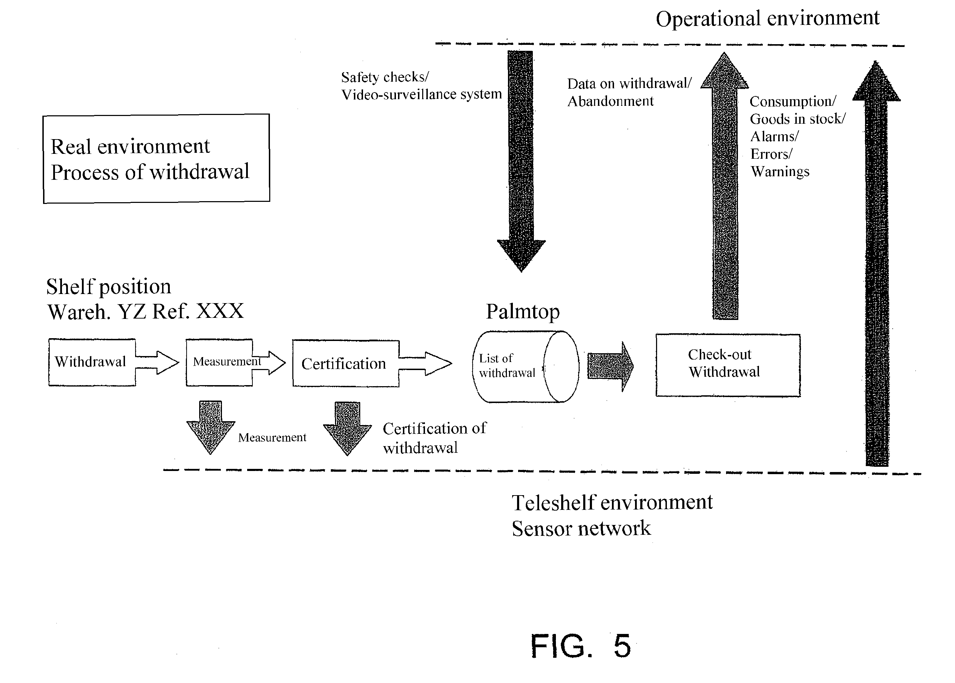

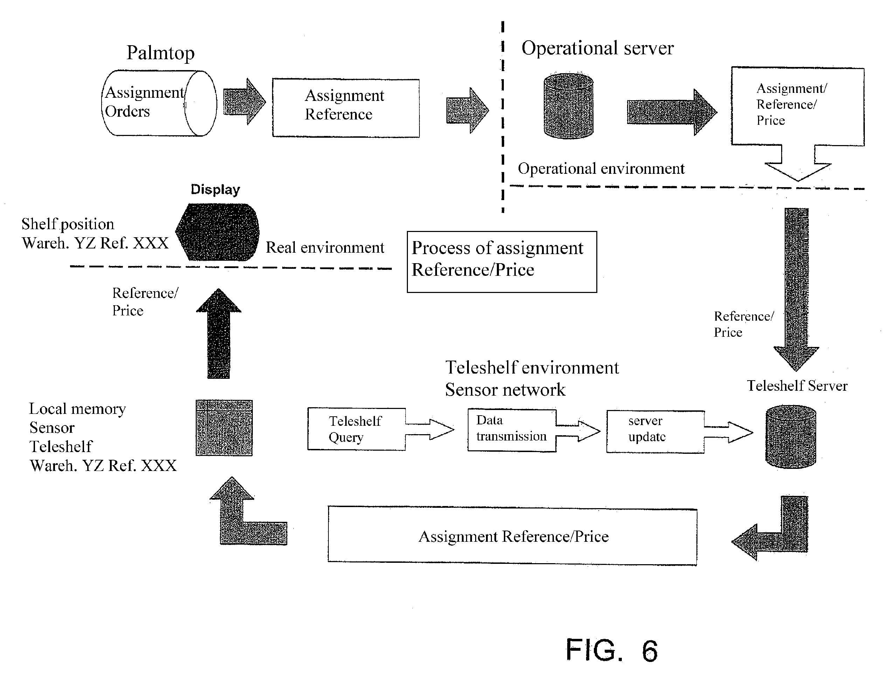

Figures 2, 3, 4, 5 and 6 show in the form of flowcharts some examples of interaction implemented by the monitoring system according to the invention between the real environment, represented by the shelf 1 in the block diagram of Figure 1, and the operational environment represented by the ERP management system 3 of Figure 1.

The flowcharts of Figures 2 to 6 are self-explanatory and hence do not require any particular comments except for the fact that what is indicated therein as "Teleshelf Environment" represents as a whole the monitoring system according to the invention.

To return to Figure 1, according to a further aspect the monitoring system according to the invention can moreover include video-camera control units designated as a whole by 5, prearranged for monitoring and keeping track of the flows and the behaviour of the consumers present in the area of the shelves 1 for display of the goods. Said configuration is indicated for producers and distributors that intend to monitor particular areas of display. By cross-checking the data on the stock and consumption levels processed starting from the signals of the sensors 2 with the data on the flow of the consumers and the data for keeping track of their movements and the places where they stop, it is possible to analyse the complex picture of how the customers approach the products and the trend of consumption of the products present on the shelf 1. Furthermore, video monitoring enables detection of any goods possibly going astray or being stolen from the shelves, with the possibility of also issuing an alarm in real time.

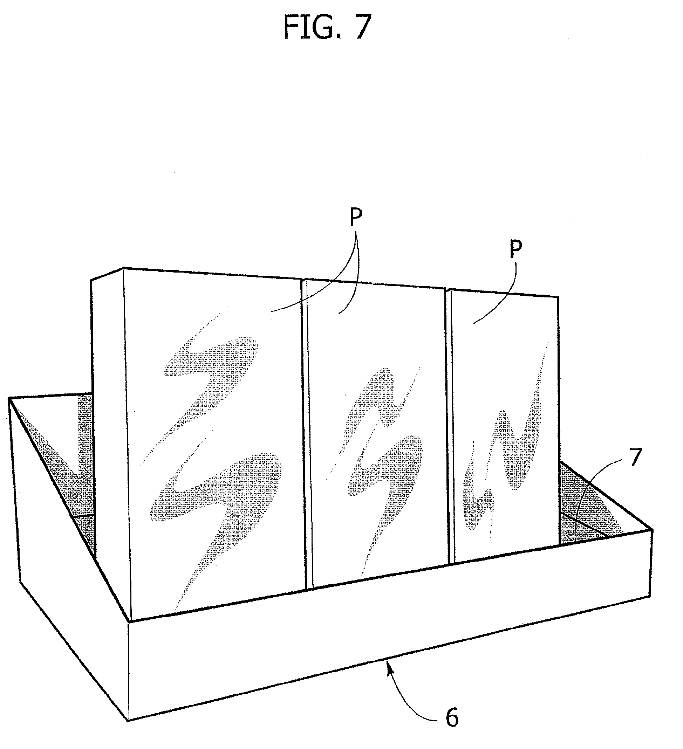

With reference now to Figures 7-9, an elementary module will be described, which can be used as display unit for the goods on the shelf 1 and incorporates the sensors for detecting the presence/absence of goods.

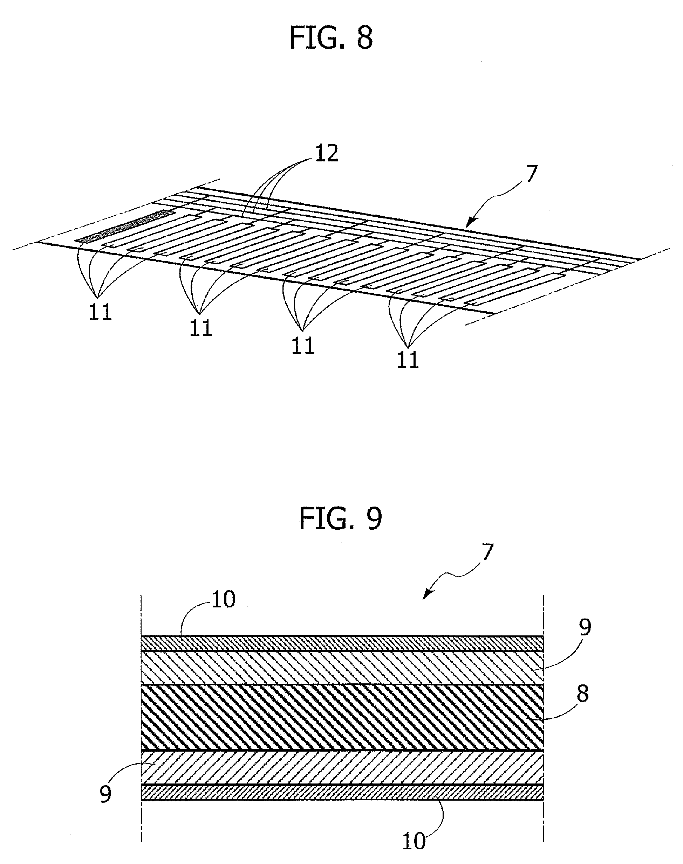

Said module is exemplified in Figure 7 as having the general shape of a tray 6, which is designed to contain packages of products P resting on its bottom surface, to which a sensitive film 7 is applied, represented in greater detail in Figures 8 and 9. Said sensitive film 7 meets two basic needs for the display of goods in a retail outlet: the miniaturization in thickness and the modularity in length. It is constituted by a substrate made of elastomeric material with high capacity of elastic return, such as for example polydimethyl siloxane (PDMS), designated by 8 and commercially available in rolls with a thickness, for example, in the region of 1 mm. The bottom and top surfaces of the substrate 8 of the film 7 are metallized, for example by means of the application of thin layers of aluminium defining conductive strips, which are set at intervals apart and are designed to constitute capacitors 11 and are then coated with thin layers, for example of silicon oxide. In the cross section of Figure 9, where the thicknesses are artificially enlarged, the aluminium metallization layers and the silicon-oxide layers of the PDMS substrate 8 are designated by 9 and 10, respectively.

The capacitors 11 thus provided on the sensitive film 7 have variable capacitance according to the load to which they are subjected. Said capacitors may present variable dimensions according to the products that are to rest thereon, and are connected by conductive paths 12 to signal-amplification cards (not represented).

Each elementary module 6 provided with the sensitive film 7 may be directly connected to the monitoring system according to the invention, and hence also to the computerized ERP management system 3, and alternatively or in addition may be provided with an independent self-supplied electronic unit equipped with a memory for real-time recording of the withdrawal of the articles from the shelves. The data stored may then be downloaded in deferred mode from the module through a normal USB connection socket for downloading data directly into a mass-storage device, or in a palmtop device, or else a cellphone, or else a portable computer, for example to supply data useful for market research and the like.

It should be noted that the sensitive film 7 may be applied, instead of on the bottom of one or more modules 6, directly on the surface of a shelf, display unit or the like. Furthermore, the sensitive film 7 may also be used at least locally as a simple switch, by being set in a significant area (for example, a central area) of the module 6 or of the shelf on which the products to be monitored rest, for generation of an alarm signal indicating the need to restore the supply of goods. This signal may then be transmitted at a distance, for example via radio.

Of course, the details and embodiments of the system according to the invention may vary widely with respect to what is described and illustrated herein, without thereby departing from the scope of the present invention, as defined in the ensuing claims. Thus, for instance, the monitoring system of the invention can also take into account, and link to each other, historical sales data and meteorological data.

## Claims

1. A system for remote and/or deferred monitoring of the consumption of articles in stock on shelves (1) and the like, including sensor means (2; 7) operatively associated to said shelves (1) to furnish data on the presence/absence of articles, means for transmission and means for processing the data coming from said sensor means, wherein said monitoring system is operatively connected to a computerized enterprise-resource-planning (ERP) system (3) of an enterprise that markets and/or distributes, and/or produces articles.

2. The system according to Claim 1, **characterized in that** it is integrated and/or synchronized with said computerized enterprise-resource-planning system.

3. The system according to Claim 1 or Claim 2, **characterized in that** it is connected to said computerized enterprise-resource-planning system via wired connections.

4. The system according to Claim 1 or Claim 2, **characterized in that** it is connected to said computerized enterprise-resource-planning system via transmission means of an SMS, GSM, GPRS, UTMS, Internet, Wi-Fi, radiofrequency type, and the like.

5. The system according to any one of the preceding claims, **characterized in that** moreover operatively associated to said shelves (1) are video-camera display means (5).

6. The system according to any one of the preceding claims, **characterized in that** said sensor means include a resting surface for the goods, which is formed by an elastic film (7) bearing metallization strips (9), which are set at intervals apart and define capacitors with a capacitance that varies as a function of the load (11), said capacitors being connected via electrical connection paths (12) to said transmission means.

7. The system according to Claim 6, **characterized in that** said elastic film (7) is laid directly on the surface of said shelves (1) or the like.

8. The system according to Claim 6, **characterized in that** said elastic film (7) is applied on the bottom of a modular container/display unit (6).

9. The system according to Claim 6, **characterized in that** said modular container/display unit (6) is provided with means for recording data on consumption of the articles that can be downloaded in deferred mode.

10. The system according to any one of Claims 6 to 8, **characterized in that** said elastic film (7) is arranged at least locally to issue an alarm signal in the event of absence of articles.
